# EUROPEAN PATENT SPECIFICATION

(11) **EP 3 645 786 B1**
(45) Date of publication and mention of the grant of the patent: **11.08.2021**
(21) Application number: 18733882.7
(22) Date of filing: 29.06.2018
(51) Int. Cl.: D21C 11/00, C07G 1/00, C08H 1/00, D21C 3/20

(54) **PROCESS FOR SEPARATING LIGNIN FROM LIGNOCELLULOSIC MATERIALS**
VERFAHREN ZUR TRENNUNG VON LIGNIN AUS LIGNOCELLULOSEMATERIALIEN
PROCÉDÉ DE SÉPARATION DE LIGNINE À PARTIR DE MATÉRIAUX LIGNOCELLULOSIQUES

(30) Priority: 30.06.2017 EP 17382423
(43) Date of publication of application: 06.05.2020
(73) Proprietor: Fundación Tecnalia Research & Innovation, 20009 Donostia - San Sebastian (ES)
(72) Inventor: OCHOA GÓMEZ, José Ramón, 01510 Miñano (ES); BLANCO PÉREZ, Noelia, 01510 Miñano (ES); LORENZO IBARRETA, Leire, 01510 Miñano (ES)
(74) Representative: ZBM Patents - Zea, Barlocci & Markvardsen
(86) International application number: PCT/EP2018/067587
(87) International publication number: WO 2019/002553

(56) References cited:
- WO-A1-2013/153203
- WO-A1-2014/060651
- WO-A1-2014/105601
- WO-A1-2014/179702
- US-A1- 2012 132 379

## Description

### Technical Field

The present invention belongs to the field of processes for extracting materials. In particular, it is related to processes for separating lignin from lignocellulosic materials using solvents, more specifically CO₂-triggered switchable solvents, in order to recover cellulose substantially free of lignin.

### Background Art

Obtaining chemicals and energy in a biorefinery requires the fractionation of lignocellulosic raw materials in their three main components: cellulose, hemicellulose and lignin. The most developed method for this purpose is steam explosion. In a steam explosion process the lignocellulosic biomass is treated with hot steam (180-230 °C) under pressure (1-3 MPa) followed by an explosive decompression resulting in the breakdown of the biomass fiber structure. The flash depressurizing defibrillates the cellulose bundles and makes cellulose more accessible for subsequent hydrolysis to obtain glucose to be used as a raw material in fermentative or chemical processes.

After steam explosion two streams are obtained: an aqueous liquid containing compounds resulting from the hydrolysis-degradation of hemicellulose, such as for instance xylose and acetic acid, and also some chemicals resulting from lignin degradation; and a solid one made up of cellulose and most of the lignin.

The solid stream is usually subjected to an aqueous enzymatic hydrolysis to hydrolyze the cellulose to glucose, which dissolves in the aqueous medium. Upon hydrolysis completion, the solid is filtered out and the aqueous sugar solution is subjected to detoxification processes to remove the fermentation inhibitory compounds, such as, for example, furfural coming from xylose degradation and 5-hydroxymethylfurfural resulting from glucose degradation; as well as phenolics resulting from depolymerization of lignin, which otherwise would prevent the use of glucose as a carbon source in fermentation processes, such as the production of bioethanol.

However, the presence of lignin hinders the enzymatic hydrolysis of cellulose leading to both a decrease in yield and in productivity. Therefore, it is desirable to separate the lignin previously. In fact, the solid remaining after the enzymatic hydrolysis contains all the lignin in the starting solid and significant amounts of non-hydrolyzed cellulose, which may be up to 50% by weight relative to the total mass of lignin and cellulose contained in said solid. The separation of this lignin from the residual cellulose is also desired as it would favor the subsequent valorization of both cellulose and lignin.

Thus, methods for separating lignin from cellulose have been developed. A typical and well known method for lignin separation is to treat the solid consisting of cellulose and lignin with an aqueous solution of a base such as sodium hydroxide or ammonia, whereby lignin is solubilized and can be separated from the solid cellulose by filtration. However, the recovery of lignin requires its precipitation by neutralizing the alkaline solution with an acid, such as HCl o H₂SO₄, which results in the undesired generation of large volumes of an effluent with a high content of inorganic salts.

Other methods employ solvents, wherein the steam pretreated biomass in a first step (to remove the hemicellulose) is extracted in a second step with a solvent, such as ethanol, to dissolve the lignin leaving the cellulose in the solid state. However, the extraction takes place at 180-200°C under pressure and the isolation of lignin requires solvent evaporation, so that these procedures have many disadvantages, such as being energy intensive.

Other newer methods use ionic liquids (ILs). However, these methods require working at temperatures as high as 100 °C and low 43% extraction yields are achieved. In these methods, cosolvents must be used in order to increase the yield up to 60%. Also, the separation of lignin from the ILs upon cooling to room temperature is not quantitative. As an example, lignin can be separated from cellulose by solid-liquid extraction in the ionic liquid 1-butyl-3-methyl-imidazolium chloride at 100-150 °C. This method has two strong drawbacks: the high working temperature and the high volume of hot water needed to recover the lignin by precipitation: 5 volumes of hot water per volume of lignin solution in the IL must be added. Consequently, a large volume of IL-containing effluent is generated which greatly hinders the IL recovery. Generally, methods employing ionic liquids have, in addition to the aforementioned drawbacks, the problem that ILs are expensive substances (the estimated prices are 20-30 €/kg for a production of 100 tons of IL). Therefore, their use in the industrial production of low price materials, like lignin, is prohibitive. Moreover, there is some controversy as to whether ILs can actually be considered green solvents because, in some cases, their production consumes a lot of energy, and their biodegradability is poor.

Another alternative for lignin extraction currently under study are methods using switchable solvents, which are liquids that switch from a hydrophobic form to a hydrophilic form when a trigger is applied. This form change is reversible; therefore, the solvent can be shifted back from the hydrophilic to the hydrophobic form when the trigger is removed by gentle heating and/or by bubbling a gas, such as nitrogen or air, and/or under vacuum.

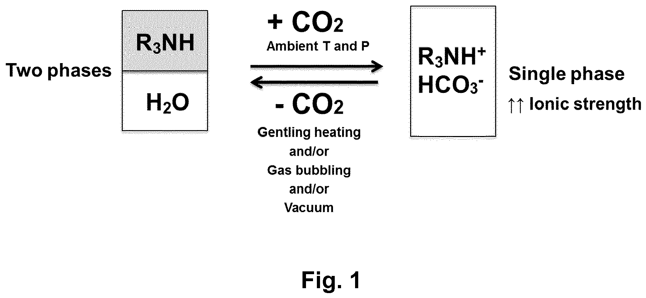

Basically, CO2SSs (CO₂-triggered switchable solvents) are formed by reaction in water, at room temperature and ambient pressure, of CO₂ and water non-soluble organic bases such as amines, guanidines and amidines, as shown in Fig.1 for a tertiary amine. As indicated in Fig. 1, a key feature of CO2SSs is that the ionic strength of the single-phase aqueous system increases significantly as a result of the formation of the bicarbonate of the amine, which significantly modifies the solubility in said system of many organic compounds. This effect, together with the reversibility between the two forms, can be exploited in separation processes such as solid-liquid and liquid-liquid extraction as described in WO2011050469.

Switchable solvents derived from an alkanol amine and an organic super base have been described to dissolve lignin from lignocellulosic materials (cf. Ikenna Anugwom, et al., "Switchable Ionic Liquids as Delignification Solvents for Lignocellulosic Materials", ChemSusChem 2014, vol. 7, pp. 1170-1176). However, the use of these particular switchable solvents for lignin extraction has several drawbacks: (a) the extraction yield is lower than 80%; (b) the switchable solvents used are complex and formed by two nitrogenated species, one of which (1,8-diazabicyclo-[5.4.0]-undec-7-ene, DBU) is an expensive compound; (c) they require the use of an anti-solvent to remove the dissolved components; and (d) recovering the anti-solvent requires an energy-intensive evaporation stage.

In view of the above, a need remains for expanding the repertoire of switchable solvents, particularly CO2SSs, that allow a selective and total separation of lignin from cellulose. Simple, efficient, and inexpensive switchable solvents for lignin removal from a lignocellulosic material that do not require the use of anti-solvents or energy-intensive steps would represent a step forward in the field.

### Summary of Invention

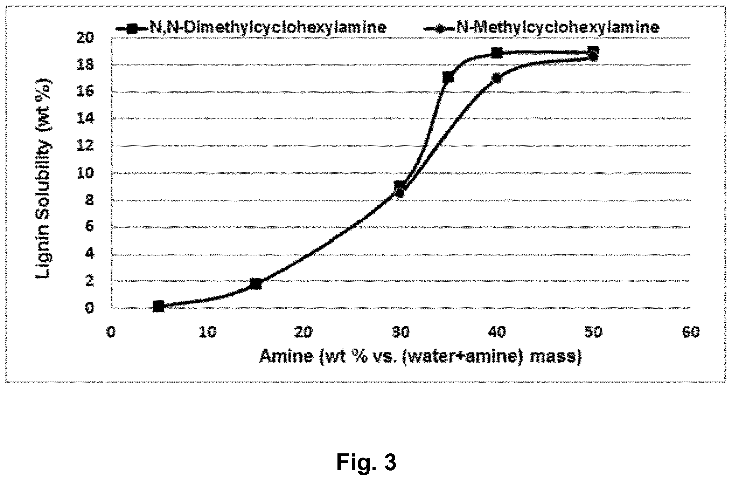

The present inventors have devised a process for separating lignin from lignocellulosic materials at room temperature by solid-liquid extraction using CO₂-triggered switchable solvents (CO2SSs) in order to obtain cellulose free or substantially free of lignin. Surprisingly, the inventors have found that when lignin extraction is performed using CO₂-triggered switchable solvents comprising a water-insoluble secondary or tertiary amine, the yield and the selectivity of the extraction are very high. Particularly good results have been obtained when N,N-dimethylcyclohexylamine or N-methylcyclohexylamine are used, as can be observed in Fig. 3., since they allow to perform lignin extractions with complete selectivity and an unbeatable yield of 100%.

Thus, an aspect of the present invention is a process for separating lignin from a lignocellulosic material comprising lignin and cellulose, in order to obtain cellulose free or substantially free of lignin, which is cellulose that contains an amount of lignin equal to or lower than 1%, the process comprising the steps of:
a) Preparing a CO₂-triggered switchable solvent by mixing water, a water-insoluble amine selected from the group consisting of a secondary amine, a tertiary amine, and a combination thereof, and CO₂; until a single aqueous phase is formed; wherein the CO₂-triggered switchable solvent refers to the hydrophilic form of the water-insoluble amine obtained after mixing the water and the water-insoluble amine with the CO₂; wherein the amine is selected from the group consisting of N,N-dimethylcyclohexylamine, N-methylcyclohexylamine, N,N-diethylcyclohexylamine, and N-ethylcyclohexylamine;
b) Mixing the lignocellulosic material with the CO₂-triggered switchable solvent obtained in step (a), thereby the lignin is dissolved in the solvent and the cellulose is not dissolved; and
c) Separating the cellulose.

The disadvantages of the prior art processes for extracting lignin from lignocellulosic materials were overcome by employing the process of the present invention, which selectively separates lignin from cellulose by solid-liquid extraction using CO2SSs as extraction solvents. The addition of CO₂ to the two phase aqueous system formed by water and a water-insoluble secondary or tertiary amine, triggers the protonation of the amine and the formation of a single phase aqueous system (i.e. the CO2SSs). The inventors have found that lignin is highly soluble in the CO₂-triggered form of the switchable solvent, while cellulose is not, therefore the simple action of mixing of the lignocellulosic material with the CO₂-triggered switchable solvent leads to the separation of the cellulose, which remains solid and non-dissolved, and the lignin that gets dissolved in the solvent generating a solution. The cellulose is recovered by a simple solid/liquid extraction, and the extracted lignin can be easily recovered either by heating the solution of the lignin in the CO2SS at a temperature lower than that of the water boiling point, bubbling an inert gas such as nitrogen, argon or air, applying a vacuum, and a combination thereof, causing the release of the CO₂ which results in the deprotonation of the solvent and in the separation of the water and the amine generating two distinct phases: an aqueous phase; and an organic phase consisting in the water-insoluble secondary or the tertiary amine, or the mixture thereof. The lignin, which is not soluble neither in water nor in the deprotonated amine, then precipitates and is easily separated using a solid-liquid separation method. Once the lignin is separated, the mixture comprising the amine and the water is ready to be reutilized in another round of extraction.

As explained below, the CO2SSs used in the process of the invention are highly specific and efficient in lignin extraction. More importantly, they do not require the use of anti-solvents to recover the extracted lignin, thus avoiding the use of volatile and dangerous compounds. Furthermore, they allow the extraction to be performed at room temperature, which saves large amounts of energy, and they do not require large volumes of liquid that would hinder the scalability of the process.

Additionally, the ability of the CO2SSs to shift back to the hydrophobic form (two phases) by heating and/or by bubbling an inert gas, such as nitrogen, argon or air, and/or by applying a vacuum, is a key feature that allows the complete recycling of the water-insoluble amines with low energy consumption, with no need of using inorganic salts of costly recovery.

All these characteristics make the process of the invention an ideal alternative for lignin extraction due to its simplicity, extraordinary yield, use of inexpensive compounds, and low energetic cost.

### Brief Description of Drawings

Fig. 1 shows a scheme that illustrates how a tertiary amine-based CO₂-triggered switchable solvent is formed, and the reversibility between the hydrophobic and the hydrophilic forms. Ambient T and P means ambient temperature and pressure.

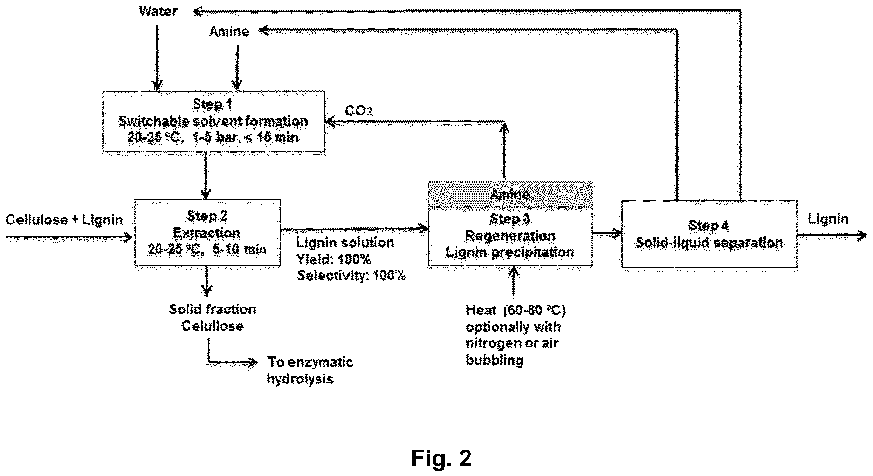

Fig. 2 is a block diagram depicting one embodiment of the process of the present invention, wherein for illustrative purposes a tertiary amine is used for preparing the CO₂-triggered switchable solvent.
Fig. 3 is a plot showing the variation of lignin solubility (in wt% relative to the total mass of solution) of two CO₂-triggered switchable solvents at various N,N-dimethylcyclohexylamine and N-methylcyclohexylamine concentrations (relative to the sum of amine and water before CO₂ bubbling) at 25 °C.

### Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

For purposes of the present invention, any ranges given include both the lower and the upper end-points of the range. Ranges given, such as temperatures, times, and the like, should be considered approximate, unless specifically stated.

As used herein, the indefinite articles "a" and "an" are synonymous with "at least one" or "one or more." Unless indicated otherwise, definite articles used herein, such as "the," also include the plural of the noun.

As stated above, the inventors propose a process for lignin extraction using CO₂-triggered switchable solvents that comprise a water-insoluble secondary or tertiary amine in order to obtain cellulose free or substantially free of lignin.

As used herein, by "substantially free of lignin" is meant that the specified substance, particularly the cellulose, contains an amount of lignin equal to or lower than 1%, more particularly equal to or lower than 0.1 %, and even more particularly, equal to or lower than 0.01% of lignin as characterized by any suitable analytical technique (e.g. working out the total content of lignin by adding up the acid-insoluble lignin content, as determined by the Klason method, with that of acid-soluble lignin as determined by UV).

As used herein, a "switchable solvent" is a water-insoluble amine, particularly a secondary or tertiary amine, that switches between a first hydrophobic form and a second hydrophilic ionic form in response to a selected trigger, in this case the trigger is CO₂. The change is reversible and, thus the removal of the trigger, i.e. the CO₂, causes the hydrophilic form to switch to the hydrophobic form. The hydrophobic form is sufficiently hydrophobic that it is immiscible with water and will separate from an aqueous mixture. The term "CO₂-triggered switchable solvent" refers to the hydrophilic form of the switchable solvent, namely the form obtained after mixing the water and the water-insoluble amine with the CO₂.

As used herein, the term "water-insoluble amine" refers to an amine whose water solubility is equal to or lower than 20 g/L, particularly equal to or lower than 10 g/L, at 20 °C.

The term "lignocellulosic material" refers to plant dry matter comprising cellulose and lignin.

Other water-insoluble amine that can be used is a compound of formula (I): 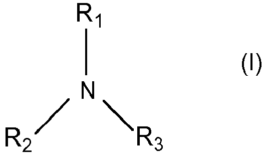 wherein R₁ is a (C₅-C₆)cycloalkyl radical; R₂ is a (C₁-C₅)alkyl radical; and R₃ is hydrogen or a (C₁-C₅)alkyl radical. More particularly, R₁ is a (C₅-C₆)cycloalkyl radical; R₂ is a (C₁-C₂)alkyl radical; and R₃ is hydrogen or a (C₁-C₂)alkyl radical.

The term "(C₁-C₅)alkyl" refers to a saturated straight or branched hydrocarbon chain containing from 1 to 5 carbon atoms. Illustrative non-limitative examples include methyl, ethyl, propyl, isopropyl, butyl, isobutyl, sec-butyl, tert-butyl, and pentyl.

The term "(C₅-C₆)cycloalkyl" refers to saturated ring systems containing from 5 to 6 carbon atoms. Particularly, the cycloalkyl is cyclopentyl or cyclohexyl.

In one particular embodiment, optionally in combination with any embodiment provided above or below, the water-insoluble amine of the process of the first aspect is selected from the group consisting of N,N-dimethylcyclohexylamine, N-methylcyclohexylamine, N,N-diethylcyclohexylamine, and N-ethylcyclohexylamine. More particularly, it is selected from N,N-dimethylcyclohexylamine and N-methylcyclohexylamine. As mentioned above, these two amines allow performing lignin extractions with complete selectivity and yields of 100%.

In another particular embodiment, optionally in combination with any embodiment provided above or below, the amount of amine added in step (a) is from 20 wt% to 50 wt% relative to the total amount of amine and water before bubbling CO₂. More particularly, from 30 wt% to 50 wt%. Particularly good lignin solubility is obtained when the amount of amine is from 40 wt% to 50 wt% relative to the total amount of amine and water before bubbling CO₂, as can be seen in Fig. 3. Therefore, more particularly, the amount of amine is from 40 wt% to 50 wt%. As used herein, the term "wt%" or "percentage by weight" of a component refers to the amount of the single component relative to the total weight of the composition or, if specifically mentioned, of other component.

As explained above, the switchable solvents of the present invention are triggered by mixing the amine and the water with CO₂. Said mixture can be obtained in various ways, such as bubbling the CO₂ through the mixture. As used herein, "bubbling" means releasing the gas from below a liquid thereby forming rising balls of gas that appear in the liquid. Thus, as an instance, the CO₂-triggered switchable solvent is formed by bubbling CO₂ at room temperature under agitation and, particularly, at ambient pressure, although a CO₂ pressure up to 1 MPa can be used to speed up its formation rate. As commented above, CO₂ is bubbled until a single aqueous phase is formed.

The time required for the switchable solvent to form a single phase, once the CO₂ is applied, depends on pressure and agitation, but is usually less than 15 minutes.

Hence, in another particular embodiment, optionally in combination with any embodiment provided above or below, the step (a) of the first aspect is performed while stirring, particularly while vigorously stirring. As used herein, the term "vigorously stirring" means a stirring speed that allows a full mixing of water and the secondary amine, the tertiary amine, and a combination thereof.

In another particular embodiment, optionally in combination with any embodiment provided above or below, the mixture of step (a) is carried out by bubbling CO₂ through the water and the amine at a pressure ranging from ambient pressure to 1 MPa, optionally while stirring. More particularly, the CO₂ is bubbled at a pressure ranging from ambient pressure to 1 MPa. Even more particularly, the CO₂ is bubbled at ambient pressure. As used herein the term "ambient pressure" means a pressure from 98 kPa to 105 kPa.

The extraction temperature of the process of the invention can be from 10 °C to 40 °C, but there is no advantage in operating below or above room temperature. As used herein, the term "room temperature" means a temperature from 15 °C to 35 °C, particularly from 20 °C to 25°C. Thus, in another particular embodiment, optionally in combination with any embodiment provided above or below, the step (b) of the first aspect is performed at room temperature.

The amount of amine-water mixture to be used will be that necessary to extract all the lignin in a single stage; that is, enough so that the concentration of lignin is lower than the saturation concentration at the working temperature. For example, if a mixture of N,N-dimethylcyclohexylamine and water is used to form the CO₂-triggered switchable solvent, said amount at 25 °C would be suitable for a concentration of lignin equal to or lower than 9.0%, 17.0%, 18.8% and 18.9 wt% (relative to the total amount of solution) for concentrations of said amine relative to the total amount of amine plus water of 30%, 35%, 40% and 50%, respectively, according to Fig. 3.

In step (b), lignin may be extracted by mixing the lignocellulosic material with the CO₂-triggered switchable solvent for less than 30 minutes at room temperature and ambient pressure under vigorous stirring.

Therefore, in another particular embodiment, optionally in combination with any embodiment provided above or below, the step (b) of the first aspect is performed while stirring until the lignin has completely dissolved in the CO₂-triggered switchable solvent.

Then, the cellulose is separated from the solution by any solid-liquid separation means known in the art, such as, for example, decantation, filtration, or centrifugation.

Hence, in another particular embodiment, optionally in combination with any embodiment provided above or below, the step (c) of the first aspect is performed by decantation, filtration or centrifugation. More particularly, by filtration.

In another particular embodiment, optionally in combination with any embodiment provided above or below, the process according to the first aspect further comprises the following steps:
d) removing the CO₂ from a solution of lignin in the CO₂-triggered switchable solvent resulting from the separation of the cellulose in step (c), thereby triggering the separation of the water and the amine into two distinct phases, and the precipitation of the lignin; and
e) separating the precipitated lignin.

The removal of the CO₂ from the CO₂-triggered switchable solvent leads to the decomposition of the salt of the amine, which causes the separation of the amine and the water into two distinct phases, producing the precipitation of the lignin-which is not soluble neither in water nor in the deprotonated amine. Removal of said CO₂ from the switchable solvent according to step (d) can be carried out with any suitable methods known to the skilled person, e.g. by gentle heating or by bubbling an inert gas or under vacuum, or by a combination thereof.

In another particular embodiment, optionally in combination with any embodiment provided above or below, the process according to the first aspect comprises using the mixture of amine and water resulting from step (e) for preparing the CO₂-triggered switchable solvent of step (a). Therefore, the water and the amine required to prepare the CO₂-triggered switchable solvent in step (a) can be provided either separately or together in the form of a mixture.

In a particular embodiment, optionally in combination with any embodiment provided above or below, step (d) is performed by heating the solution at a temperature from 50°C to 100°C. More particularly, from 60 °C to 80 °C. Even more particularly, at 70 °C.

To favor the release of the CO₂ and to speed the lignin precipitation up, the heating of the solution may be carried out under vacuum, particularly at an absolute pressure of from 10 kPa to 50 kPa; by bubbling an inert gas, such as argon, air or nitrogen; or by combining both operation modes. As used herein, "inert gas" refers to gas that does not react with the amine, the dissolved lignin or the water.

Hence, in another particular embodiment, optionally in combination with any embodiment provided above or below, step (d) is performed either under vacuum or by bubbling an inert gas, such as nitrogen, argon or air, through the solution, or by a combination thereof. More particularly, the inert gas comprises N₂. And even more particularly, the inert gas is air or N₂. More particularly, the inert gas is air.

Once the lignin has precipitated, it is separated from the liquid medium by any solid-liquid separation means known in the art, such as, for example, decantation, filtration, or centrifugation. The filtrate, consisting on the amine and the water, is recycled to step (a). After washing the lignin cake with CO₂-acidified water to entrain the amine retained by the lignin cake, and subsequently with water, lignin is dried preferably at a temperature from 50 °C to 70 °C.

Therefore, in another particular embodiment, optionally in combination with any embodiment provided above or below, step (e) is performed by solid/liquid separation; more particularly, by a method selected from a group consisting of centrifugation, decantation and filtration; more particularly, by centrifugation.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

The following examples are only given for illustrative purposes and are not construed to limit the scope of the present invention in any way.

### Examples

A mixture of 1 g of lignin and 1 g of microcrystalline cellulose was vigorously stirred for 15 minutes at 25 °C with a CO₂-triggered switchable solvent prepared by bubbling CO₂ at 25 °C and ambient pressure through a mixture of 4 g of N,N-dimethylcyclohexylamine and 6 g of water. Thereafter, the slurry was filtered through a 0.45 µm filter and the cake was first washed with the CO₂-triggered switchable solvent and then with water. After drying the cake at 105 °C, 1 g of product was obtained. Then the infrared absorption spectrum of the cake was measured by Attenuated total reflectance-Fourier transform infrared spectroscopy (ATR-FTIR), and its spectrum matched 100% with that of the starting cellulose. Therefore, the switchable solvent extracted 100% of the lignin with 100% selectivity.

The filtrate was then heated at 70 °C under stirring until complete phase separation between the water and the amine occurred, which resulted in the lignin precipitation. After filtering, washing the cake with carbonated water with carbon dioxide and drying at 50 °C, 0.95 g of a brown solid whose FTIR spectrum was identical to that of the starting lignin was obtained. Isolated lignin yield was 95%. The filtrate was dark brown indicating that very low molecular weight lignin fractions remained dissolved in the mixture of amine and water. The filtrate was then recycled to the step of preparing the CO₂-triggered switchable solvent.

The instruments and methods used to characterize the products prepared according to the invention are as follows:
ATR-FTIR: Fourier transform infrared spectroscopy is a technique which is used to obtain an infrared spectrum of absorption or emission of a solid, liquid or gas. An FTIR spectrometer simultaneously collects high spectral resolution data over a wide spectral range. Attenuated total reflectance (ATR) is one accessory to measure FTIR spectra of liquids and solids. It allows measure surface properties of solids with no need of sample preparation by grinding the material to a fine powder and dispersing it in a matrix such as KBr or nujol.

### Citation List

### Patent Literature

WO2011050469

### Non Patent Literature

Ikenna Anugwom, et al., "Switchable Ionic Liquids as Delignification Solvents for Lignocellulosic Materials", ChemSusChem 2014, vol. 7, pp. 1170-1176

## Claims

1. Process for separating lignin from a lignocellulosic material comprising lignin and cellulose, in order to obtain cellulose free or substantially free of lignin, which is cellulose that contains an amount of lignin equal to or lower than 1 %, the process comprising the steps of:
a) preparing a CO₂-triggered switchable solvent by mixing:
- water;
- a water-insoluble amine which is a secondary amine, a tertiary amine, or a combination thereof; and
- CO₂
until a single aqueous phase is formed;
wherein the CO₂-triggered switchable solvent refers to the hydrophilic form of the water-insoluble amine obtained after mixing the water and the water-insoluble amine with the CO₂;
wherein the amine is selected from the group consisting of N,N-dimethylcyclohexylamine, N-methylcyclohexylamine, N,N-diethylcyclohexylamine, and N-ethylcyclohexylamine;
b) mixing the lignocellulosic material with the CO₂-triggered switchable solvent obtained in step (a), thereby the lignin is dissolved in the solvent and the cellulose is not dissolved; and
c) separating the cellulose.

2. The process according to claim 1, wherein the amine is N,N-dimethylcyclohexylamine or N-methylcyclohexylamine.

3. The process according to any one of claims 1 to 2, wherein the amine added in step (a) is from 20 wt% to 50 wt% relative to the total amount of amine and water before bubbling CO₂.

4. The process according to any one of claims 1 to 3, wherein the amine added in step (a) is from 40 wt% to 50 wt% relative to the total amount of amine and water before bubbling CO₂.

5. The process according to any one of claims 1 to 4, wherein the mixing of step (a) is carried out by bubbling the CO₂ through the water and the amine at a pressure ranging from ambient pressure to 1 MPa, while stirring.

6. The process according to any one of claims 1 to 5, wherein the mixing of step (a) is carried out by bubbling the CO₂ through the water and the amine at room temperature, while stirring.

7. The process according to any one of claims 1 to 6, wherein step (b) is performed at room temperature, while stirring.

8. The process according to any one of claims 1 to 7, further comprising the following steps:
d) removing the CO₂ from a solution of lignin in the CO₂-triggered switchable solvent resulting from the separation of the cellulose in step (c), thereby triggering the separation of the water and the amine into two distinct phases, and the precipitation of the lignin; and
e) separating the precipitated lignin.

9. The process according to claim 8, comprising using the mixture of amine and water resulting from step (e) for preparing the CO₂-triggered switchable solvent of step (a).

10. The process according to any one of claims 8 to 9, wherein step (d) is performed by heating the solution at a temperature from 50 °C to 100 °C.

11. The process according to claim 10, wherein step (d) is performed by heating the solution at a temperature from 60 °C to 80 °C.

12. The process according to any one of claims 8 to 11, wherein step (d) is performed either under vacuum or by bubbling an inert gas through the solution, or by a combination thereof.

13. The process according to claim 12, wherein the inert gas is N₂, argon or air.

14. The process according to any one of claims 8 to 13, wherein step (e) is performed by solid/liquid separation.

15. The process according to claim 14, wherein step (e) is performed by a method selected from a group consisting of centrifugation, decantation and filtration.

## Patentansprüche

1. Verfahren zum Trennen von Lignin aus einem Lignocellulosematerial umfassend Lignin und Cellulose, um Cellulose frei oder im Wesentlichen frei von Lignin zu erhalten, die Cellulose ist, die eine Ligninmenge von 1% oder weniger enthält, wobei das Verfahren folgende Schritte umfasst:
a) Herstellen eines durch CO₂ ausgelösten schaltbaren Lösungsmittels durch Mischen von:
- Wasser;
- ein wasserunlösliches Amin, das ein sekundäres Amin, ein tertiäres Amin oder eine Kombination davon ist; und
- CO₂
bis eine einzelne wässrige Phase gebildet ist;
wobei sich das durch CO₂ ausgelöste schaltbare Lösungsmittel auf die hydrophile Form des wasserunlöslichen Amins bezieht, die nach dem Mischen des Wassers und des wasserunlöslichen Amins mit dem CO₂ erhalten wird;
wobei das Amin ausgewählt ist aus der Gruppe bestehend aus N,N-Dimethylcyclohexylamin, N-Methylcyclohexylamin, N,N-Diethylcyclohexylamin und N-Ethylcyclohexylamin;
b) Mischen des Lignocellulosematerials mit dem durch CO₂ ausgelösten schaltbaren Lösungsmittel, das in Schritt (a) erhalten wurde, wodurch das Lignin in dem Lösungsmittel gelöst wird und die Cellulose nicht gelöst wird; und
c) Trennen der Cellulose.

2. Das Verfahren nach Anspruch 1, wobei das Amin N,N-Dimethylcyclohexylamin oder N-Methylcyclohexylamin ist.

3. Das Verfahren nach einem der Ansprüche 1 bis 2, wobei das in Schritt (a) zugesetzte Amin 20 Gew.-% bis 50 Gew.-% bezogen auf die Gesamtmenge an Amin und Wasser vor dem Durchperlen von CO₂ beträgt.

4. Das Verfahren nach einem der Ansprüche 1 bis 3, wobei das in Schritt (a) zugesetzte Amin 40 Gew.-% bis 50 Gew.-% bezogen auf die Gesamtmenge an Amin und Wasser vor dem Durchperlen von CO₂ beträgt.

5. Das Verfahren nach einem der Ansprüche 1 bis 4, wobei das Mischen von Schritt (a) durchgeführt wird, indem das CO₂ durch das Wasser und das Amin bei einem Druck im Bereich vom Umgebungsdruck bis 1 MPa unter Rühren durchperlt wird.

6. Das Verfahren nach einem der Ansprüche 1 bis 5, wobei das Mischen von Schritt (a) durchgeführt wird, indem das CO₂ durch das Wasser und das Amin bei Raumtemperatur unter Rühren durchperlt wird.

7. Das Verfahren nach einem der Ansprüche 1 bis 6, wobei Schritt (b) bei Raumtemperatur unter Rühren durchgeführt wird.

8. Das Verfahren nach einem der Ansprüche 1 bis 7, weiterhin umfassend die folgenden Schritte:
d) Entfernen des CO₂ aus einer Lösung von Lignin in dem durch CO₂ ausgelösten schaltbaren Lösungsmittel, die aus der Trennung der Cellulose in Schritt (c) resultiert, wodurch die Trennung des Wassers und des Amins in zwei verschiedene Phasen und die Ausfällung des Lignins ausgelöst wird; und
e) Abtrennen des ausgefällten Lignins.

9. Das Verfahren nach Anspruch 8, umfassend die Verwendung der Mischung aus Amin und Wasser, die aus dem Schritt (e) resultiert, zur Herstellung des durch CO₂ ausgelösten schaltbaren Lösungsmittels von Schritt (a).

10. Das Verfahren nach einem der Ansprüche 8 bis 9, wobei Schritt (d) durch Erhitzen der Lösung auf eine Temperatur von 50 °C bis 100 °C durchgeführt wird.

11. Das Verfahren nach Anspruch 10, wobei Schritt (d) durch Erhitzen der Lösung auf eine Temperatur von 60 °C bis 80 °C durchgeführt wird.

12. Das Verfahren nach einem der Ansprüche 8 bis 11, wobei Schritt (d) entweder unter Vakuum oder durch Durchperlen eines Inertgases durch die Lösung, oder durch eine Kombination davon, durchgeführt wird.

13. Das Verfahren nach Anspruch 12, wobei das Inertgas N₂, Argon oder Luft ist.

14. Das Verfahren nach einem der Ansprüche 8 bis 13, wobei der Schritt (e) durch Feststoff/Flüssigkeit-Trennung durchgeführt wird.

15. Das Verfahren nach Anspruch 14, wobei der Schritt (e) durch ein Verfahren durchgeführt wird, das aus einer Gruppe ausgewählt ist, die aus Zentrifugation, Dekantierung und Filtration besteht.

## Revendications

1. Procédé de séparation de lignine d'un matériau lignocellulosique comprenant de la lignine et de la cellulose, afin d'obtenir une cellulose exempte ou essentiellement exempte de lignine, qui est de la cellulose qui contient une quantité de lignine égale ou inférieure à 1 %, le procédé comprenant les étapes de :
a) préparer un solvant commutable déclenché par CO₂ en mélangeant :
- de l'eau ;
- une amine insoluble dans l'eau qui est une amine secondaire, une amine tertiaire ou une combinaison de celles-ci ; et
- CO₂
jusqu'à ce qu'une seule phase aqueuse soit formée ;
dans lequel le solvant commutable déclenché par CO₂ se réfère à la forme hydrophile de l'amine insoluble dans l'eau obtenue après mélanger l'eau et l'amine insoluble dans l'eau avec le CO₂ ;
dans lequel l'amine est choisie dans le groupe constitué par la N,N-diméthylcyclohexylamine, la N-méthylcyclohexylamine, la N,N-diéthylcyclohexylamine et la N-éthylcyclohexylamine ;
b) mélanger le matériau lignocellulosique avec le solvant commutable déclenché par CO₂ obtenu à l'étape (a), par lequel la lignine est dissoute dans le solvant et la cellulose n'est pas dissoute ; et
c) séparer la cellulose.

2. Le procédé selon la revendication 1, dans lequel l'amine est la N,N-diméthylcyclohexylamine ou la N-méthylcyclohexylamine.

3. Le procédé selon l'une quelconque des revendications 1 à 2, dans lequel l'amine ajoutée dans l'étape (a) est de 20 % en poids à 50 % en poids par rapport à la quantité totale d'amine et d'eau avant le barbotage du CO₂.

4. Le procédé selon l'une quelconque des revendications 1 à 3, dans lequel l'amine ajoutée dans l'étape (a) est de 40 % en poids à 50 % en poids par rapport à la quantité totale d'amine et d'eau avant le barbotage du CO₂.

5. Le procédé selon l'une quelconque des revendications 1 à 4, dans lequel le mélange de l'étape (a) est réalisé en faisant barboter le CO₂ à travers l'eau et l'amine à une pression allant de la pression ambiante à 1 MPa, sous agitation.

6. Le procédé selon l'une quelconque des revendications 1 à 5, dans lequel le mélange de l'étape (a) est réalisé en faisant barboter le CO₂ à travers l'eau et l'amine à température ambiante, sous agitation.

7. Le procédé selon l'une quelconque des revendications 1 à 6, dans lequel l'étape (b) est réalisée à température ambiante, sous agitation.

8. Le procédé selon l'une quelconque des revendications 1 à 7, comprenant en outre les étapes suivantes :
d) élimination du CO₂ d'une solution de lignine dans le solvant commutable déclenché par CO₂ résultant de la séparation de la cellulose à l'étape (c), déclenchant ainsi le séparation de l'eau et de l'amine en deux phases distinctes, et la précipitation de la lignine ; et
e) séparer la lignine précipitée.

9. Le procédé selon la revendication 8, comprenant l'utilisation du mélange d'amine et d'eau résultant de l'étape (e) pour préparer le solvant commutable déclenché par CO₂ de l'étape (a).

10. Le procédé selon l'une quelconque des revendications 8 à 9, dans lequel l'étape (d) est réalisée en chauffant la solution à une température de 50 °C à 100 °C.

11. Le procédé selon la revendication 10, dans lequel l'étape (d) est réalisée en chauffant la solution à une température de 60 °C à 80 °C.

12. Le procédé selon l'une quelconque des revendications 8 à 11, dans lequel l'étape (d) est réalisée soit sous vide, soit en faisant barboter un gaz inerte à travers la solution, ou par une combinaison de ceux-ci.

13. Le procédé selon la revendication 12, dans lequel le gaz inerte est du N₂, de l'argon ou de l'air.

14. Le procédé selon l'une quelconque des revendications 8 à 13, dans lequel l'étape (e) est réalisée par séparation solide / liquide.

15. Le procédé selon la revendication 14, dans lequel l'étape (e) est réalisée par un procédé choisi dans un groupe comprenant la centrifugation, la décantation et la filtration.
